# EUROPEAN PATENT APPLICATION

(11) **EP 2 574 137 A1**
(43) Date of publication of application: **27.03.2013**
(21) Application number: 10851580.0
(22) Date of filing: 20.05.2010
(51) Int. Cl.: H04W 80/10

(54) **METHOD AND DEVICE FOR FORKING CALL REQUEST TO CALLED USER ADDRESS**

(71) Applicant: Alcatel Lucent, 75007 Paris (FR)
(72) Inventor: CUI, Hong, Qingdao, Shandong 266001 (CN); ZHAO, Ruteng, Qingdao, Shandong 266001 (CN)
(74) Representative: Hervouet, Sylvie
(86) International application number: PCT/CN2010/072975
(87) International publication number: WO 2011/143821

(57) **Abstract**

The invention provides a method and apparatus, in a network device, for forking a calling request to a first registered called user address among a plurality of registered called user addresses. The method comprises: obtaining forking-related information, the forking-related information corresponding to the public user identity code and representing a forking order relationship between at least one calling number and the plurality of registered called user addresses; receiving the calling request from a calling user equipment; determining the first registered called user address among the plurality of registered called user addresses according to the number of the calling user equipment and the forking-related information corresponding to the public user identity code; and forking the calling request to the first registered called user address. The forking scheme of a calling request for a calling number recorded in the forking-related information may be different from that of a calling number which is not recorded in the forking-related information. In this way, a specific forking scheme can be adopted for some specific numbers to thereby satisfy a personalized demand of a user.

## Description

### Field of the invention

The present disclosure relates to a communication system and particularly to a method and apparatus for forking a calling request to one of a plurality of registered called user addresses.

### Background of the invention

In an 3^{rd} Generation Partnership Project (3GPP) IP Multimedia Subsystem (IMS), a Serving-Call Session Control Function (S-CSCF) entity can support a public user identity with a plurality of registered contact addresses, that is, a user can be associated concurrently with a plurality of contact addresses, e.g., a cell phone address, a fixed phone address, a voice mailbox address, etc.. When a public user identity is associated with a plurality of registered contact addresses, the S-CSCF shall support forking so that a Session Initiation Protocol (SIP) request pointing to the public user identity can be forwarded to the plurality of registered contact addresses.

In a parallel forking scheme, the SIP request is transmitted concurrently to the plurality of registered addresses associated with the public user identity, and then all of user equipments corresponding to the respective registered contact addresses will ring substantially at the same time.

In a sequential forking scheme, one of the plurality of registered addresses associated with the public user identity is determined according to numerical values corresponding respectively to the plurality of registered addresses, and the SIP request is forked to the determined registered address, and then only the user equipment corresponding to the determined registered address will ring.

### Summary of the invention

The inventors have identified that in the existing forking scheme, the forking scheme is the same for different calling numbers. However a user wishes to enable a specific forking scheme to be applied to a specific category of calling numbers in some application scenarios. For the incoming call from a family member, for example, the user wishes to enable a calling request to be preferentially forked to a registered address corresponding to a fixed phone so that the user can communicate with the family member for a long time period without worrying about the radiation problem due to communication using a cell phone. In another example, for a "spam" call, e.g., a commercial survey or a promotion call, the user wishes to enable a calling request to be preferentially forked to a registered address corresponding to a voice mailbox to thereby alleviate or avoid the negative effect of the "spam" call on his or her life.

With understanding of the background of the invention and of the foregoing problem, it will be of great benefit if the forking scheme applied for some calling numbers can be different from that of other calling numbers.

In order to address the foregoing concern, according to an embodiment of an aspect of the invention, there is provided a method, in a network device, of forking a calling request to a first registered called user address among a plurality of registered called user addresses, the plurality of registered called user addresses sharing a public user identity code, the method comprising the steps of:
A. obtaining forking-related information, the forking-related information corresponding to the public user identity code and representing a forking order relationship between at least one calling number and the plurality of registered called user addresses;
B. receiving the calling request from a calling user equipment, the calling request including the public user identity code, and the calling user equipment corresponding to one number of said at least one calling number;
C. determining the first registered called user address among the plurality of registered called user addresses according to the number of the calling user equipment and the forking-related information corresponding to the public user identity code; and
D. forking the calling request to the first registered called user address.

If a calling number is recorded in the forking-related information, then the registered address of a forking destination of a calling request from the calling number is determined taking into account the forking-related information representing a forking order relationship between at least one calling number and a plurality of registered called user addresses, so the calling request of the calling number can be forked to the corresponding registered address in a forking scheme related to the forking-related information. In other words, the forking scheme of a calling request for a calling number recorded in the forking-related information may be different from that of a calling number which is not recorded in the forking-related information. In this way, a specific forking scheme can be adopted for some specific numbers to thereby satisfy a personalized demand of the user.

Optionally each of said at least one calling number corresponds respectively to only one of the plurality of registered called user addresses, that is, a calling number is associated with only one registered called user address. Since a calling number is associated with only one registered called user address, forking operations of the network device can be simplified and it will be convenient for a user to use.

According to an embodiment of another aspect of the invention, there is provided a forking apparatus, in a network device, for forking a calling request to a first registered called user address among a plurality of registered called user addresses, the plurality of registered called user addresses sharing a public user identity code, the forking apparatus comprising:
a first device configured to obtain forking-related information, the forking-related information corresponding to the public user identity code and representing a forking order relationship between at least one calling number and the plurality of registered called user addresses;
a second device configured to receive the calling request from a calling user equipment, the calling request including the public user identity code, and the calling user equipment corresponding to one number of said at least one calling number;
a third device configured to determine the first registered called user address among the plurality of registered called user addresses according to the number of the calling user equipment and the forking-related information corresponding to the public user identity code; and
a fourth device configured to fork the calling request to the first registered called user address.

The respective aspects of the invention will become more apparent from the following description of embodiments.

### Brief description of drawings

The foregoing and other features, objects and advantages of the invention will become more apparent upon review of the following detailed description of non-limiting embodiments taken with reference to the drawings in which:
Fig.1 is a flow chart of a method of forking a calling request to one of a plurality of registered called user addresses according to an embodiment of the invention;
Fig.2a to Fig.2d illustrate embodiments of the forking-related information according to the invention;
Fig.3 is a flow chart of a method of forking a calling request to one of a plurality of registered called user addresses according to another embodiment of the invention;
Fig.4 is a flow chart of a method of obtaining the forking-related information by a network device according to an embodiment of the invention; and
Fig.5 is a schematic diagram of a forking apparatus according to an embodiment of the invention.

Identical or like reference numerals denote identical or like components throughout the drawings.

### Detailed description of embodiments

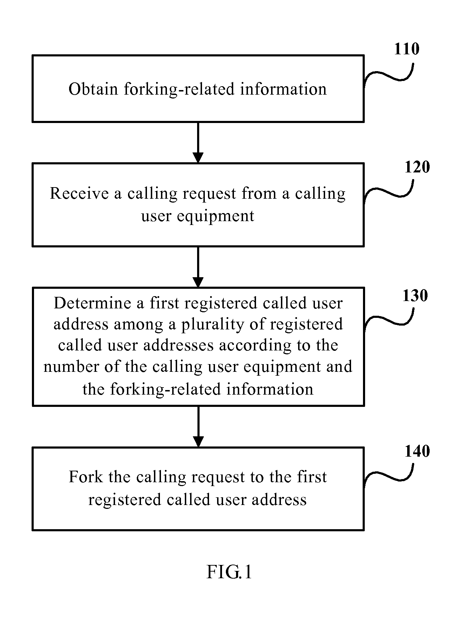

Fig. 1 is a flow chart of a method according to an embodiment of the invention.

According to an embodiment of an aspect of the invention, there is provided a method, in a network device, of forking a calling request to a first registered called user address among a plurality of registered called user addresses.

A plurality of registered called user addresses share a public user identity code, for example, a public user identity code is associated with a plurality of registered called user addresses. The plurality of registered called user addresses can include any one of the following: an address corresponding to a cell phone, an address corresponding to a fixed phone and an address corresponding to a voice mailbox. The network device is configured to fork a calling request and can be embodied in numerous ways, for example, as an S-CSCF entity in an IMS system.

Referring to Fig.1, the method includes the step 110 in which the network device obtains forking-related information. The forking-related information corresponds to the public user identity code and represents a forking order relationship between at least one calling number and the plurality of registered called user addresses.

The network device can obtain the forking-related information in numerous ways, for example, obtain the forking-related information from a user and store it in the network device or obtain the forking-related information from another network device.

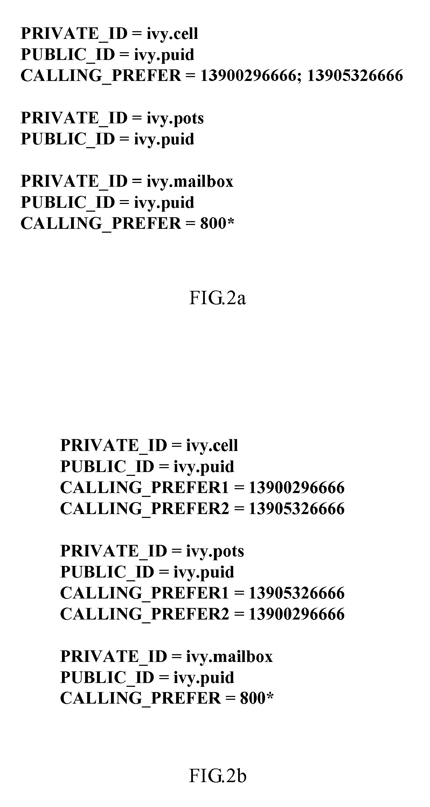

The forking-related information can be represented in numerous ways. Fig.2a to Fig.2d illustrate embodiments of the forking-related information according to the invention.

In an embodiment, each of the at least one calling number corresponds respectively to only one of the plurality of registered called user addresses, that is, a calling number is associated with only one registered called user address. In the forking-related information as illustrated in Fig.2a, PUBLIC_ID is a public user identifier, PRIVATE_ID is a registered called user address sharing the public user identifier, and CALLING_PREFER is a calling number preferentially forked to a corresponding registered address. The forking-related information illustrated in Fig.2a includes three registered called user addresses corresponding to the public user identifier ivy.puid, where ivy.cell is the registered called user address corresponding to a cell phone, ivy.pots is the registered called user address corresponding to a fixed phone, and ivy.mailbox is the registered called user address corresponding to a voice mailbox. Two calling numbers corresponding to the registered called user address ivy.cell are two cell phone numbers 13900296666 and 13905326666, that is, the calling request of these two numbers will be forked to the registered called user address ivy.cell. The calling number corresponding to the registered called user address ivy.mailbox is a number with leading 800, that is, the calling request of the number with leading 800 will be forked to the registered called user address ivy.mailbox. Since a calling number is associated with only one registered called user address, forking operations of the network device can be simplified, and it will be convenient for a user to use.

In a further embodiment, at least one of the at least one calling number corresponds respectively to more than one of the plurality of registered called user addresses, that is, a calling number is associated with more than one registered called user address. In the forking-related information as illustrated in Fig.2b, CALLING_PREFER1 is a calling number initially forked to a registered called user address, and CALLING_PREFER2 is a calling number re-forked to another registered called user address if a user equipment corresponding to the initially forked registered called user address does not answer the calling request in a predetermined time period. Corresponding to the forking-related information illustrated in Fig.2b and taking a calling request from the calling number 13905326666 as an example, it will be forked initially to the registered called user address ivy.pots and will be forked to the registered called user address ivy.cell if there is no response in a predetermined time period.

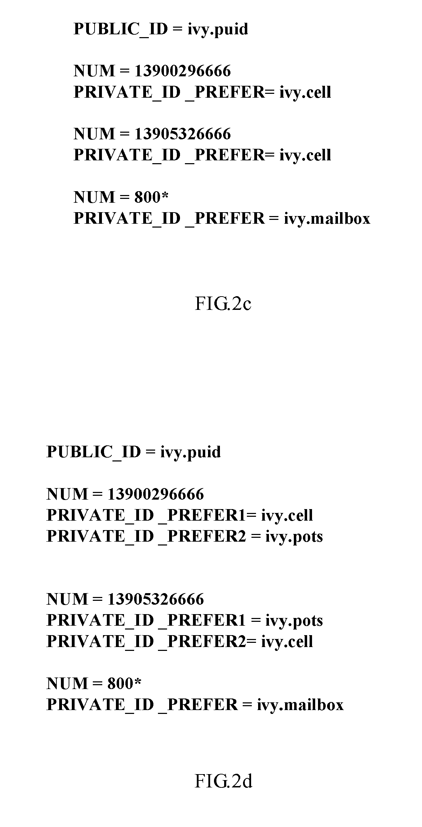

In the foregoing two embodiments, the forking order relationship between the calling number and the registered called user addresses is listed per category of registered called user address. Optionally the forking order relationship between the calling number and the registered called user addresses can be listed per category of calling number, as the forking-related information illustrated in Fig.2c and Fig.2d. The forking-related information illustrated in Fig.2c and Fig.2d can play the same role of forking, and the forking-related information illustrated in Fig.2c and Fig.2d can play the same role of forking.

The method further includes the step 120 in which the network device receives the calling request from a calling user equipment. The calling request includes the public user identity code, and the calling user equipment corresponds to one number of the at least one calling number. The at least one calling number includes numbers of various types of user equipments, e.g., a number of a cell phone, a number of a fixed phone, etc.

The method further includes the step 130 in which the network device determines the first registered called user address among the plurality of registered called user addresses according to the number of the calling user equipment and the forking-related information corresponding to the public user identity code.

The first registered called user address is the finally determined registered called user address of a forking destination. The network device can determine the forking-related information corresponding to the public user identity code via the public user identity code in the calling request. Since the forking order relationship between the at least one calling number and the plurality of registered called user addresses is recorded in the forking-related information, e.g., the forking-related information illustrated in Fig.2a to Fig.2d, the network device can determine the registered called user address to be forked to according to the forking-related information.

The method further includes the step 140 in which the network device forks the calling request to the first registered called user address.

A calling user which is not recorded in the forking-related information can be forked in an existing forking scheme, e.g., parallel forking or sequential forking. The relevant forking scheme shall be known to those skilled in the art and a detailed description thereof will not be repeated.

A method of forking a calling request to one of a plurality of registered called user addresses will be further described below taking an IMS system as an example.

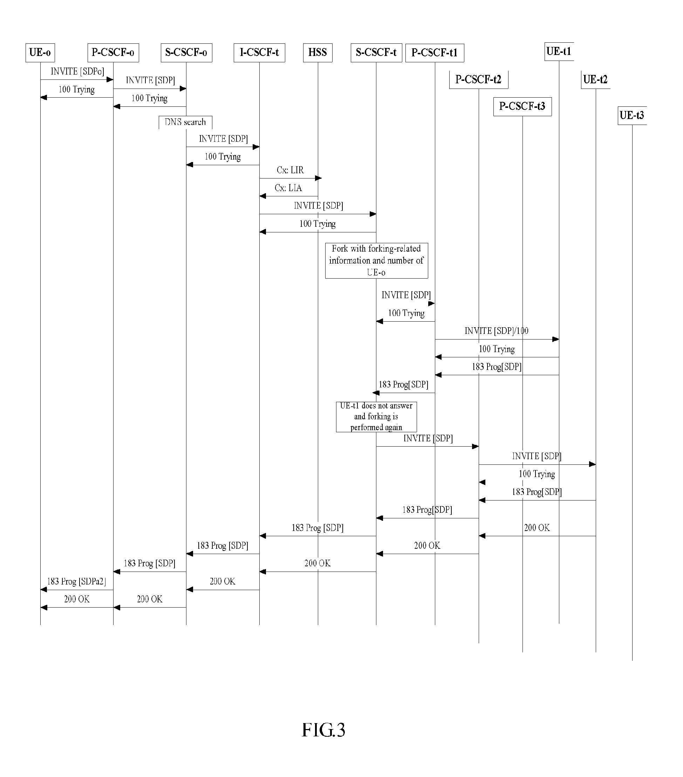

Fig.3 is a flow chart of a method of forking a calling request to one of a plurality of registered called user addresses according to another embodiment of the invention.

Referring to Fig.3, firstly a user equipment UE-o transmits a calling request message INVITE to a Proxy-Call Session Control Function (P-CSCF) entity P-CSCF-o corresponding to the UE-o via the Session Initiation Protocol (SIP).

Then the calling request is forwarded to a Serving-Call Session Control Function (S-CSCF) entity S-CSCF-t corresponding to the identity (which can also be referred to as an identity code) of a destination user of the calling request sequentially through a Serving-Call Session Control Function (S-CSCF) entity S-CSCF-o corresponding to the UE-o and an Interrogating-Call Session Control Function (I-CSCF) entity I-CSCF-t corresponding to the identity of the destination user of the calling request, wherein I-CSCF-t obtains the related information of S-CSCF-t through inquiring a Home Subscriber Server (HSS).

Next S-CSCF-t determines the calling request to be forked to a UE-t1 corresponding to a registered called user address according to the forking-related information and the number of UE-o and transmits the calling request to UE-t1 via a Proxy-Call Session Control Function (P-CSCF) entity P-CSCF-t1 corresponding to UE-t1. UE-t1 reports reception of the calling request through feeding back a message 100 Trying and reports ongoing processing of the calling request at UE-t1 via a progress report message 183 Prog.

Finally the calling request has no final response 200OK at UE-t1 so S-CSCF-t forks the calling request again to UE-t2. S-CSCF-t can adopt numerous ways for further forking, for example, perform forking according to the forking-related information and the number of UE-o or perform forking according to only numerical values corresponding to UE-t2 and UE-t3. Finally the calling request is answered at UE-t2.

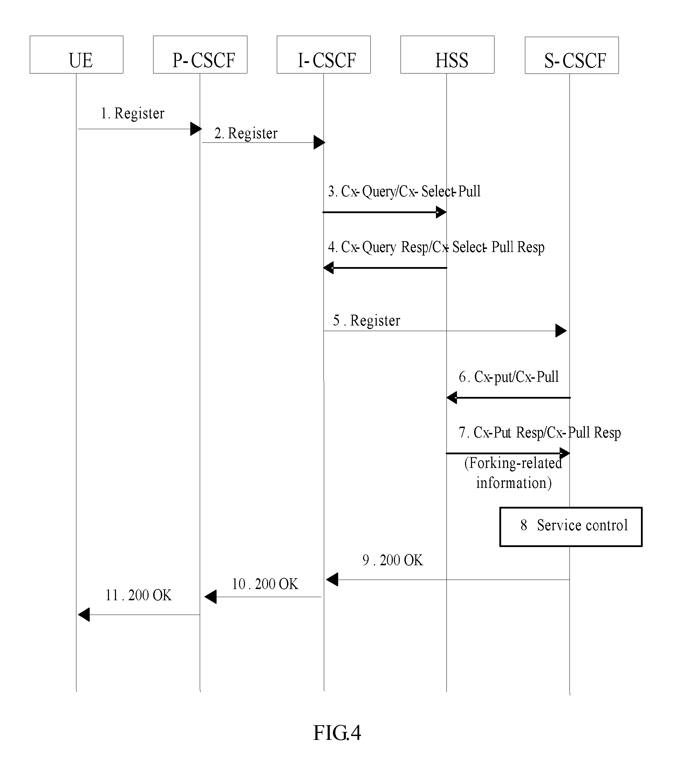

Fig.4 is a flow chart of a method of obtaining forking-related information by a network device according to an embodiment of the invention.

Referring to Fig.4, S-CSCF obtains forking related information, e.g., the forking related information illustrated in Fig.2a to Fig.2d, from HSS in the step 7 in a registration procedure of a user equipment UE.

The forking related information can be put in a user-data Attribute Value Pair (AVP) of a Serving Assignment Answer (SAA) command. The user-data attribute value pair including the forking related information can be defined in the following XML language.

```
 <?xml version=" 1.0" encoding="UTF-8"?>
 <IMSSubscription xmlns:xsi="http://www.w3.org/2001/XMLSchema-instance"
 xsi:noNamespaceSchemaLocation="D:\ \CxDataType.xsd">
   <PrivateID>ivy.cell</PrivateID>
   <ServiceProfile>
      <PublicIdentity>
         <Identity> ivy.puid </Identity>
         <CallingPrefer>
             <ID> 13900296666 </ID>
             <ID> 13905326666 </ID>
         </CallingPrefer>
      </PublicIdentity>
      <InitialFilterCriteria>
         <Priority>0</Priority>
         <TriggerPoint>
             <ConditionTypeCNF>1</ConditionTypeCNF>
             <SPT>
                <ConditionNegated>0</ConditionNegated>
                <Group>0</Group>
                <Method>INVITE</Method>
             </SPT>
             <SPT>
                <ConditionNegated>0</ConditionNegated>
                <Group>0</Group>
                <Method>MESSAGE</Method>
             </SPT>
             <SPT>
                <ConditionNegated>0</ConditionNegated>
                <Group>0</Group>
                <Method>SUB SCRIBE</Method>
             </SPT>
             <SPT>
                <ConditionNegated>0</ConditionNegated>
                <Group> 1 </Group>
                <Method>INVITE</Method>
             </SPT>
             <SPT>
                <ConditionNegated>0</ConditionNegated>
                <Group> 1 </Group>
                <Method>MESSAGE</Method>
             </SPT>

             <SPT>
                <ConditionNegated>1</ConditionNegated>
                <Group> 1 </Group>
                <SIPHeader>
                    <Header>From</Header>
                    <Content>"joe"</Content>
                </SIPHeader>
             </SPT>
         </TriggerPoint>
         <ApplicationServer>
             <ServerName>sip:AS1@homedomain.com</ServerName>
             <DefaultHandling>0</DefaultHandling>
         </ApplicationServer>
      </InitialFilterCriteria>
   </ServiceProfile>

 </IMS Subscription
```

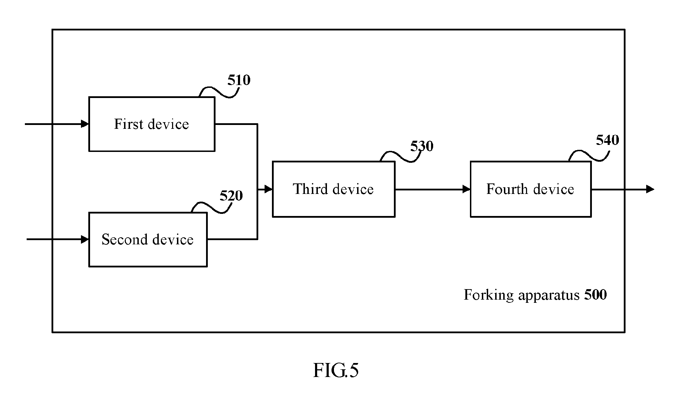

Fig.5 is a schematic diagram of a forking apparatus according to an embodiment of the invention.

According to an embodiment of another aspect of the invention, there is provided a forking apparatus, in a network device, of forking a calling request to a first registered called user address among a plurality of registered called user addresses.

A plurality of registered called user addresses share a public user identity code. The plurality of registered called user addresses can include any one of the following: an address corresponding to a cell phone, an address corresponding to a fixed phone and an address corresponding to a voice mailbox. The network device is configured to fork a calling request and can be embodied in numerous ways, for example, as an S-CSCF entity in an IMS system.

Referring to Fig.5, The forking apparatus 500 includes a first device 510, a second device 520, a third device 530 and a fourth device 540.

The first device 510 is configured to obtain forking-related information, the forking-related information corresponding to the public user identity code and representing a forking order relationship between at least one calling number and the plurality of registered called user addresses.

The network device can obtain the forking-related information in numerous ways, for example, obtain the forking-related information from a user and store it in the network device or obtain the forking-related information from another network device. Optionally the network device can obtain the forking-related information from HSS.

The forking-related information can be represented in numerous ways.

In an embodiment, each of the at least one calling number corresponds respectively to only one of the plurality of registered called user addresses, that is, a calling number is associated with only one registered called user address.

In a further embodiment, at least one of the at least one calling number corresponds respectively to more than one of the plurality of registered called user addresses, that is, a calling number is associated with more than one registered called user address.

A forking order relationship between the calling number and the registered called user addresses can be represented in numerous ways, for example, listed per category of registered called user address or listed per category of calling number.

The second device 520 is configured to receive the calling request from a calling user terminal device, the calling request including the public user identity code, and the calling user terminal device corresponding to one number of the at least one calling number. The at least one calling number includes numbers of various types of user equipments, e.g., a number of a cell phone, a number of a fixed phone, etc. The second device 520 can be embodied in numerous ways, e.g., as a receiver.

The third device 530 is configured to determine the first registered called user address among the plurality of registered called user addresses according to the number of the calling user terminal device and the forking-related information corresponding to the public user identity code.

The first registered called user address is the finally determined registered called user address of a forking destination. The network device can determine the forking-related information corresponding to the public user identity code via the public user identity code in the calling request. Since the forking order relationship between the at least one calling number and the plurality of registered called user addresses is recorded in the forking-related information, the network device can determine the registered called user address to be forked to according to the forking-related information.

The fourth device 540 is configured to fork the calling request to the first registered called user address.

In an embodiment, the first device 510 includes a fifth device configured to receive the forking-related information from a home subscriber server.

In a further embodiment, the forking apparatus further includes a sixth device configured to transmit the calling request to the first registered called user address via a proxy-call session control function entity of the called user address.

It is apparent to those skilled in the art that the invention will not be limited to the details of the foregoing exemplary embodiments and that the invention can be embodied in other specific forms without departing from the spirit or essential features of the invention. Therefore the embodiments shall be regarded as being exemplary but not limiting in any respect, and the scope of the invention will be defined by the appended claims not the foregoing description, and thus it is intended to encompass in the invention all of variations falling into the signification and scope of equivalents of the claims. Any reference numerals in the claims shall not be construed as limiting the claims in question. Furthermore it is apparent that the term "comprising" will not preclude another device(s) or step(s) and that a singular form will not preclude a plural form. A plurality of devices stated in a system claim can alternatively be embodied by a single device in software or hardware. The terms "first", "second", etc., are intended to designate a name but not to represent any specific order.

## Claims

1. A method, in a network device, of forking a calling request to a first registered called user address among a plurality of registered called user addresses, the plurality of registered called user addresses sharing a public user identity code, the method comprising the steps of:
A. obtaining forking-related information, the forking-related information corresponding to the public user identity code and representing a forking order relationship between at least one calling number and the plurality of registered called user addresses;
B. receiving the calling request from a calling user equipment, the calling request including the public user identity code, and the calling user equipment corresponding to one number of said at least one calling number;
C. determining the first registered called user address among the plurality of registered called user addresses according to the number of the calling user equipment and the forking-related information corresponding to the public user identity code; and
D. forking the calling request to the first registered called user address.

2. The method according to claim 1, wherein in the forking-related information, each of said at least one calling number corresponds respectively to only one of the plurality of registered called user addresses.

3. The method according to claim 1, wherein the network device is a serving-call session control function entity.

4. The method according to claim 3, wherein the step A is performed by the step of:
- receiving the forking-related information from a home subscriber server.

5. The method according to claim 4, wherein after the step D, the method further comprises the step of:
- transmitting the calling request to the first registered called user address via a proxy-call session control function entity of the called user address.

6. The method according to claim 1, wherein the plurality of registered called user addresses include any one of the following: an address corresponding to a cell phone, an address corresponding to a fixed phone and an address corresponding to a voice mailbox.

7. A forking apparatus, in a network device, for forking a calling request to a first registered called user address among a plurality of registered called user addresses, the plurality of registered called user addresses sharing a public user identity code, the forking apparatus comprising:
a first device configured to obtain forking-related information, the forking-related information corresponding to the public user identity code and representing a forking order relationship between at least one calling number and the plurality of registered called user addresses;
a second device configured to receive the calling request from a calling user equipment, the calling request including the public user identity code, and the calling user equipment corresponding to one number of said at least one calling number;
a third device configured to determine the first registered called user address among the plurality of registered called user addresses according to the number of the calling user equipment and the forking-related information corresponding to the public user identity code; and
a fourth device configured to fork the calling request to the first registered called user address.

8. The forking apparatus according to claim 7, wherein in the forking-related information, each of said at least one calling number corresponds respectively to only one of the plurality of registered called user addresses.

9. The forking apparatus according to claim 7, wherein the network device is a serving-call session control function entity.

10. The forking apparatus according to claim 9, wherein the first device comprises a fifth device configured to receive the forking-related information from a home subscriber server.

11. The forking apparatus according to claim 9, further comprising a sixth device configured to transmit the calling request to the first registered called user address via a proxy-call session control function entity of the called user address.

12. The forking apparatus according to claim 7, wherein the plurality of registered called user addresses include any one of the following: an address corresponding to a cell phone, an address corresponding to a fixed phone and an address corresponding to a voice mailbox.
